**Europäisches Patentamt**

**European Patent Office**

**Office européen des brevets**

(11) Veröffentlichungsnummer: **0 381 276**

**A2**

# (12) EUROPÄISCHE PATENTANMELDUNG

(21) Anmeldenummer: **90200190.8**

(22) Anmeldetag: **29.01.90**

(51) Int. Cl.⁵: **H04N 9/68**

(30) Priorität: **02.02.89 DE 3903046**

(43) Veröffentlichungstag der Anmeldung:
**08.08.90 Patentblatt 90/32**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Kröner, Klaus**
**Immenhorstweg 94**
**D-2000 Hamburg 65(DE)**
Erfinder: **Reich, Joachim**
**Lange Koppel 91**
**D-2070 Ahrensburg(DE)**
Erfinder: **Westendorf, Wulf**
**Windröschenweg 22**
**D-2000 Hamburg 65(DE)**

(74) Vertreter: **Peters, Carl Heinrich, Dipl.-Ing. et al**
**Philips Patentverwaltung GmbH**
**Wendenstrasse 35 Postfach 10 51 49**
**D-2000 Hamburg 1(DE)**

(54) **Schaltungsanordnung zum Einstellen der Farbsättigung.**

(57) Um mit geringem schaltungstechnischem Aufwand eine breitbandig fehlerfreie Signalverarbeitung bei der Verarbeitung von Farbwertsignalen zu ermöglichen, umfaßt eine Schaltungsanordnung zum Einstellen der Farbsättigung eines Farbfernsehsignals eine Farbeinstellstufe, der im Farbfernsehsignal enthaltene Farbinformation in Form von Farbwertsignalen zuführbar ist und von der in ihrer Amplitude eingestellte Farbwertsignale abgebbar sind, eine Matrixschaltung zum Kombinieren der Farbwertsignale zu einem Leuchtdichtesignal, eine Leuchtdichte-Einstellstufe zum Einstellen der Amplitude des Leuchtdichtesignals gegenläufig zur Amplitude der Farbwertsignale und eine Verknüpfungsanordnung zum additiven Verknüpfen des eingestellten Leuchtdichtesignals mit jedem der eingestellten Farbwertsignale.

FIG.1

## Schaltungsanordnung zum Einstellen der Farbsättigung

Die Erfindung bezieht sich auf eine Schaltungsanordnung zum Einstellen der Farbsättigung eines Farbfernsehsignals.

Aus der "Valvo Technische Information" 850819 ist eine Schaltung für die Video-Signalverarbeitung, insbesondere die Farbsignalverarbeitung, bekannt. Darin werden die Farbwertsignale von ersten RGB-Eingängen über eine Eingangsklemmung einer ersten Matrix zugeführt, in der sie in ein Leuchtdichtesignal sowie ein rotes und ein blaues Farbdifferenzsignal umgewandelt werden. In dieser Form können sie über einen Signalumschalter wahlweise anstelle von über Leuchtdichte-/Farbdifferenz-Eingänge eingespeisten Fernsehsignalen auf Einstellstufen übertragen werden. In diesen Einstellstufen werden das Leuchtdichtesignal und die Farbdifferenzsignale in Kontrast, Sättigung und Helligkeit eingestellt. Aus den Farbdifferenzsignalen wird anschließend in einer umschaltbaren Farbdifferenzsignalmatrix zusätzlich zu dem roten und blauen Farbdifferenzsignal auch ein grünes Farbdifferenzsignal gewonnen. In einer zweiten Matrix werden schließlich das Leuchtdichtesignal von den Einstellstufen und die Farbdifferenzsignale von der umschaltbaren Farbdifferenzsignalmatrix in (neue) Farbwertsignale R ,G, B umgewandelt. In dieser Form werden sie einem zweiten schnellen Signalumschalter mit Klemmung zugeführt, in dem wahlweise zwischen ihnen und Signalen von zweiten RGB-Eingängen umgeschaltet werden kann zur wahlweisen Weiterleitung an nachfolgende Signalverarbeitungsstufen.

Die beschriebene Schaltungsanordnung bietet die Möglichkeit, nicht nur Fernsehsignale, sondern auch RGB-Signale beispielsweise von Videotext-Dekodern, Computern oder Videokameras für die Wiedergabe in einer Bildwiedergabeanordnung aufzuarbeiten. Dabei müssen jedoch die Signale von den ersten RGB-Eingängen zweimal matriziert werden. Liegen diese Signale in sehr breitbandiger Form für ein hochwertiges Fernsehbild vor, müssen die Matrixschaltungen mit beträchtlichem Aufwand die gleiche Breitbandigkeit aufweisen, wenn nicht eine Qualitätsverringerung des Fernsehbildes in Kauf genommen werden soll. Darüber hinaus besteht bei der vielstufigen Signalbearbeitung die Gefahr, daß bereits durch geringfügige Amplituden- und Phasenfehler ein QUASI-Übersprechen für hochfrequente Signalanteile entsteht. Insbesondere können sich geringfügige Laufzeitunterschiede in den einzelnen Signalverarbeitungsstufen an steilen Flanken der zu verarbeitenden Signale zur merklichen Abweichungen in der Deckung der Farbanteile in der Bildwiedergabeanordnung führen, was zu Farbsäumen an Stellen starken Kontrastes in der Bildwiedergabe führen kann.

Die Erfindung hat die Aufgabe, eine Anordnung zur Verarbeitung der Farbwertsignale, insbesondere zum Einstellen der Farbsättigung des Farbfernsehsignals zu schaffen, die auch mit geringem schaltungstechnischem Aufwand eine breitbandig fehlerfreie Signalverarbeitung ermöglicht.

Diese Aufgabe wird erfindungsgemäß gelöst durch eine Farbeinstellstufe, der im Farbfernsehsignal enthaltene Farbinformation in Form von Farbwertsignalen zuführbar ist und von der in ihrer Amplitude eingestellte Farbwertsignale abgebbar sind, eine Matrixschaltung zum Kombinieren der Farbwertsignale zu einem Leuchtdichte signal, eine Leuchtdichte-Einstellstufe zum Einstellen der Amplitude des Leuchtdichtesignals gegenläufig zur Amplitude der Farbwertsignale und eine Verknüpfungsanordnung zum additiven Verknüpfen des eingestellten Leuchtdichtesignals mit jedem der eingestellten Farbwertsignale.

Bei der erfindungsgemäßen Schaltungsanordnung wird der Signalweg, d.h. die Anzahl der von den Farbwertsignalen zu durchlaufenden Signalverarbeitungsstufen, zum einen drastisch verringert und zum anderen für alle Farbwertsignale angeglichen. Dadurch ist zum einen eine leichtere Einhaltung der Breitbandigkeit möglich, zum anderen werden Laufzeitunterschiede zwischen den einzelnen Farbwertsignalen vermieden. Bei einem gegenüber der bekannten Schaltungsanordnung nahezu gleichbleibenden, gegebenenfalls geringfügig verminderten Schaltungsaufwand ist außerdem die wahlweise Zufuhr von Videosignalen unterschiedlichen Formates an nachfolgende Signalverarbeitungsschaltungen möglich. Als zusätzlichen Vorteil erhält man dabei gegenüber der bekannten Schaltungsanordnung eine Einstellmöglichkeit für alle wahlweise zuzuführenden Signale, sofern dies erwünscht ist, ohne daß dadurch zusätzlicher Schaltungsaufwand entsteht.

Vorzugsweise sind in der Farbeinstellstufe die Farbwertsignale mit dem Einstellfaktor der Farbsättigung und das Leuchtdichtesignal in der Leuchtdichte-Einstellstufe mit einem der Differenz aus dem Nominalwert und dem aktuellen Wert des Einstellfaktors der Farbsättigung entsprechenden Einstellfaktor der Leuchtdichte multiplizierbar. Dadurch wird dieselbe Einstellcharakteristik der Sättigungseinstellung erreicht, wie sie bei der Anordnung nach dem Stand der Technik durch die Sättigungseinstellung der Farbdifferenzsignale erhalten wird.

Insbesondere erstreckt sich bei einer Schaltungsanordnung der vorbeschriebenen Art der Wertebereich des Einstellfaktors der Farbsättigung von 0 bis 2. Damit ist die Farbsättigung in einem weiten Bereich um den bei 1 liegenden Nominalwert des Einstellfaktors wählbar. Sowohl ein völliges Unterdrücken der Farbe als auch eine Farbübersättigung mit 6 dB sind dadurch möglich. Es zeigt sich außerdem, daß in diesem Wertebereich eine einfache Realisierung der Schaltungsanordnung gegeben ist.

In einer Weiterbildung ist statt des eingestellten Leuchtdichtesignals ein Referenzwert mit den eingestellten Farbwertsignalen verknüpfbar. Statt des Leuchtdichtesignals wird somit ein konstanter Leuchtdichtewert, vorzugsweise ein dem Schwarzwert des Leuchtdichtesignals entsprechender Gleichspannungswert, mit den eingestellten Farbwertsignalen verknüpft. Dies kann von Vorteil sein, wenn zwischen dem Signalweg des eingestellten Leuchtdichtesignals bzw. seiner Erzeugung aus den Farbwertsignalen einerseits und den Signalwegen zur Bildung der eingestellten Farbwertsignale aus den der Schaltungsanordnung zugeführten Farbwertsignalen Laufzeitunterschiede auftreten. Diese würden an Bildkonturen mit starkem Kontrast als Helligkeitsschleier hervortreten. Durch Zufuhr des konstanten Leuchtdichtewertes können derartige Helligkeitsschleier unterdrückt werden.

Bei der erfindungsgemäßen Schaltungsanordnung ist ferner in vorteilhafter Weise zur zusätzlichen Kontrasteinstellung der Farbwertsignale die Einstellung in der Farbeinstellstufe und der Leuchtdichte-Einstellstufe durch einen Kontrast-Einstellfaktor beeinflußbar. Mit der Anordnung kann dann zusätzlich zur Einstellung der Farbsättigung mit geringem Aufwand auch eine Kontrasteinstellung vorgenommen werden. Um die Zahl der Einstell stufen im Signalweg der Farbwertsignale gering zu halten, ist es dabei besonders vorteilhaft, wenn die Einstellfaktoren der Farbsättigung und der Leuchtdichte mit dem Kontrast-Einstellfaktor multiplizierbar und die produkte der Farb- bzw. der Leuchtdichte-Einstellstufe zuleitbar sind. Eine Anordnung, mit der diese Art von Verknüpfung der Einstellfaktoren durchgeführt werden kann, ist aus der DE-OS 33 31 200 im Prinzip bekannt.

In einer weiteren Ausgestaltung ist das Leuchtdichtesignal in der Leuchtedichte-Einstellstufe im Sinne einer Helligkeitseinstellung beeinflußbar. Damit kann in einfacher Weise auch eine Helligkeitseinstellung des Farbfernsehsignals mit der Einstellung der Farbsättigung kombiniert werden. Der Schaltungsaufwand dafür ist gering; die Farbwertsignale werden dadurch in ihrer Bandbreite nicht beeinflußt.

Bei einer besonders vorteilhaften Ausgestaltung der erfindungsgemäßen Anordnung sind die Farbeinstellstufe und die Verknüpfungsanordnung in einer Potentiometerschaltung zusammengefaßt, wie sie aus der DE-OS 33 31 200 im Prinzip bekannt ist. Dies gewährleistet einen besonders kurzen Signalweg der Farbwertsignale in einem einfachen Aufbau mit hoher Bandbreite.

Ausführungsbeispiele der Erfindung sind in der Zeichnung dargestellt. Darin zeigen

Fig. 1 das Blockschaltbild einer erfindungsgemäßen Anordnung,

Fig. 2, 3 und 4 Beispiele für Potentiometerschaltungen zum Einsatz in einer erfindungsgemäßen Schaltungsanordnung,

Fig. 5 eine erweiterte Potentiometerschaltung zum Einsatz in einer erfindungsgemäßen Schaltungsanordnung.

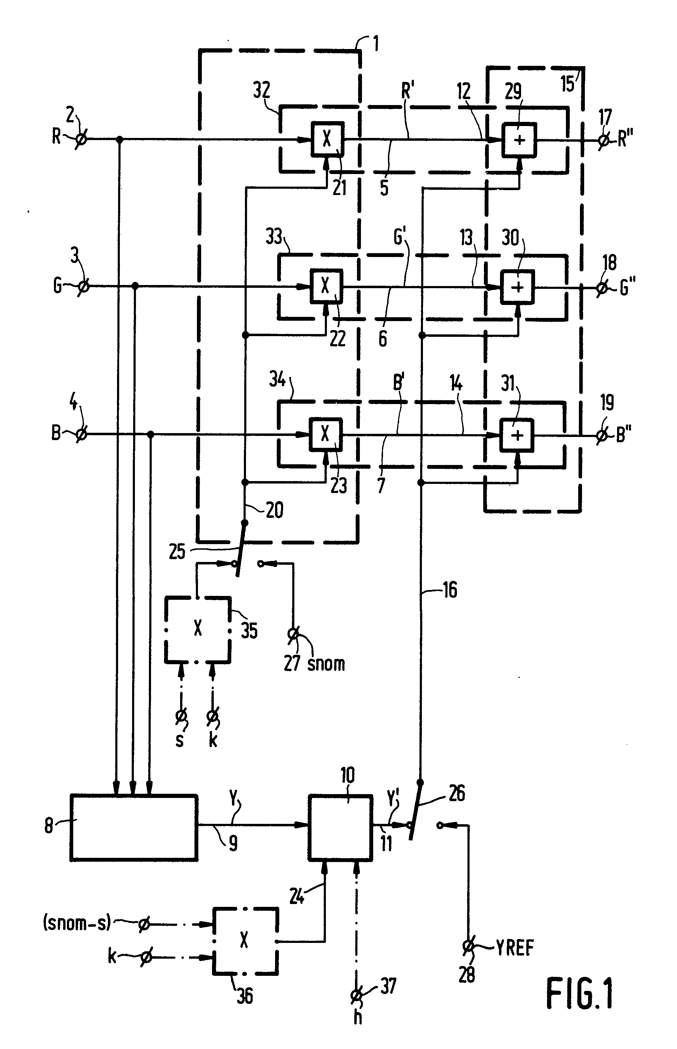

Fig. 1 zeigt das Blockschaltbild einer erfindungsgemäßen Schaltungsanordnung zum Einstellen der Farbsättigung eines Farbfernsehsignals mit einer Farbeinstellstufe 1. Dieser werden über drei Farbwertsignaleingänge 2, 3, 4 Farbwertsignale für die rote (R), die grüne (G) bzw. die blaue (B) Farbinformation im Farbfernsehsignal zugeführt. In der Farbeinstellstufe 1 werden die Farbwertsignale R, G, B gleichermaßen in ihrer Amplitude eingestellt und die eingestellten Farbwertsignale $R'$, $G'$ bzw. $B'$ an Farbwertsignalausgängen 5, 6 bzw. 7 abgegeben.

Die Anordnung nach Fig. 1 umfaßt ferner eine Matrixschaltung 8, in der in an sich bekannter Weise die Farbwertsignale R, G, B zu einem Leuchtdichtesignal Y kombiniert werden, welches an einem Leuchtdichtesignalausgang 9 der Matrixschaltung 8 abgegeben wird. In einer Leuchtdichte-Einstellstufe 10 wird das Leuchtdichtesignal Y aus der Matrixschaltung 8 in seiner Amplitude eingestellt, und zwar gegenläufig zur Einstellung der Amplitude der Farbwertsignale R, G, B in der Farbeinstellstufe 1. Das eingestellte Leuchtdichtesignal $Y'$ erscheint am Ausgang 11 der Leuchtdichte-Einstellstufe 10.

Von den Farbwertsignalausgängen 5, 6 bzw. 7 werden die eingestellten Farbwertsignale $R'$, $G'$ bzw. $B'$ Eingängen 12, 13 bzw. 14 einer Verknüpfungsanordnung 15 zugeführt, der weiterhin über einen Eingang 16 das eingestellte Leuchtdichtesignal $Y'$ zugeleitet wird. In der Verknüpfungsanordnung 15 wird das eingestellte Leuchtdichtesignal $Y'$ mit jedem der eingestellten Farbwertsignale $R'$, $G'$ und $B'$ additiv verknüpft. Die daraus gewonnenen resultierenden Farbwertsignale $R''$, $G''$ bzw. $B''$, deren Sättigung mit derselben Einstellcharakteristik eingestellt ist wie bei der Sättigungseinstellung der Farbdifferenzsignale nach dem Stand der Technik, werden an Ausgängen 17, 18 bzw. 19 der Verknüpfungsanordnung 15 abgegeben.

Der Farbeinstellstufe 1 wird über einen Einstellanschluß 20 ein Einstellsignal zugeführt, das im einfachsten Fall dem Einstellfaktor s der Farbsättigung entspricht. Mit diesem Einstellsignal wird in der Farbeinstellstufe 1 die Amplitude der Farbwertsignale R, G, B eingestellt, d.h. jedes der Farbwertsignale R, G, B wird mit dem Einstellfaktor multipliziert und ergibt so das eingestellte Farbwertsignal R', G' bzw. B'. Die Farbeinstellstufe 1 enthält dafür zu jedem der Farbwertsignale R, G, B eine Multiplizieranordnung 21, 22 bzw. 23.

In entsprechender Weise wird in der Leuchtdichte-Einstellstufe 10 das Leuchtdichtesignal Y mit einem über einen Einstellanschluß 24 zugeführten Einstellsignal multipliziert, das im einfachsten Fall dem aus der Differenz des Nominalwerts snom und des aktuellen Werts s des Einstellfaktors der Farbsättigung gebildeten Einstellfaktor der Leuchtdichte entspricht. Entsprechend der Farbeinstellstufe 1 enthält auch die Leuchtdichte-Einstellstufe 10 dazu eine Multiplizieranordnung.

Über einen Umschalter 25 kann dem Einstellanschluß 20 anstelle des Einstellfaktors s als Einstellsignal wahlweise der Nominalwert snom des Einstellfaktors der Farbsättigung zugeführt werden, wenn anstelle der einstellbaren Übertragung der Farbwertsignale R, G, B eine Übertragung mit konstanter Amplitude, d.h. mit nomineller Sättigung, erwünscht ist. Der Nominalwert snom wird vorzugsweise durch eine über einen Anschluß 27 zugeführte Referenzspannung gebildet.

Entsprechend ist in die Verbindung zwischen dem Ausgang 11 der Leuchtdichte-Einstellstufe 10 und dem Eingang 16 der Verknüpfungsanordnung 15 ein Umschalter 26 eingefügt, durch den dem Eingang 16 anstelle des eingestellten Leuchtdichtesignals Y' wahlweise ein konstanter Wert YREF - insbesondere der Schwarzwert des Leuchtdichtesignals Y -von einem Anschluß 28 zugeführt werden kann, wodurch ein konstanter Referenzwert für die Helligkeit vorgegeben und mit den eingestellten Farbwertsignalen R', G', B' verknüpft wird.

In Fig. 1 ist ferner dargestellt, daß die Multiplizieranordnungen 21, 22 bzw. 23 mit Additionsstufen 29, 30 bzw. 31, die in der Verknüpfungsanordnung 15 enthalten sind zum Verknüpfen der eingestellten Farbwertsignale R', G' bzw. B' mit dem eingestellten Leuchtdichtesignal Y' von der Leuchtdichte-Einstellstufe 10, zu Potentiometerstufen 32, 33 bzw. 34 zusammenfaßbar sind; entsprechend kann die Farbeinstellstufe 1 mit der Verknüpfungsanordnung 15 begrifflich zu einer dreikanaligen Potentiometerschaltung für die Farbwertsignale R, G bzw. B zusammengefaßt werden.

Die Anordnung nach Fig. 1 umfaßt weiterhin wahlweise eine erste und eine zweite (strichpunktiert gezeichnete) Einstellsignal-Kombinationsschaltung 35 bzw. 36, in denen die Einstellsignale an den Einstellanschlüssen 20 bzw. 24, d.h. der Einstellfaktor s bzw. die Differenz (snom - s) sofern gewünscht durch einen Kontrast-Einstellfaktor k beeinflußbar sind. Auf dem Einstellanschluß 20 der Farbeinstellstufe 1 erscheint dann als Einstellsignal das Produkt des Einstellfaktors s mit dem Kontrast-Einstellfaktor k; auf dem Einstellanschluß 24 der Leuchtdichte-Einstellstufe 10 erscheint entsprechend das Produkt aus dem Kontrast-Einstellfaktor k und der Differenz (snom - s). Die Kontrasteinstellung wird dabei ohne zusätzliche Einstellstufen in den Signalwegen für die Farbwertsignale R, G, B vorgenommen. Entsprechende Anordnungen sind aus der DE-OS 33 31 200 bekannt.

In einer bevorzugten Abwandlung ist der Umschalter 25 mit dem Anschluß 27 im Eingang für den Einstellfaktor s der ersten Einstellsignal-Kombinationsschaltung 35 angeordnet, so daß die Umschaltung zwischen s und snom die Einstellung mit dem Kontrast-Einstellfaktor k nicht beeinflußt.

Über einen zusätzlichen, wahlweise anfügbaren Eingang 37 der Leuchtdichte-Einstellstufe 10 ist das eingestellte Leuchtdichtesignal Y' im Sinne einer Helligkeitseinstellung beeinflußbar, d.h. additiv mit einem konstanten Helligkeitswert verknüpfbar. Diese Verknüpfung erfolgt bevorzugt in ähnlicher Weise wie in den Potentiometerstufen 32, 33 bzw. 34, in denen ebenfalls zunächst eine multiplikative und anschließend eine additive Signalverknüpfung vorgenommen wird. Die Leuchtdichte-Einstellstufe 10 kann dann ebenfalls in der aus der DE-OS 33 31 200 bekannten Weise ausgeführt sein.

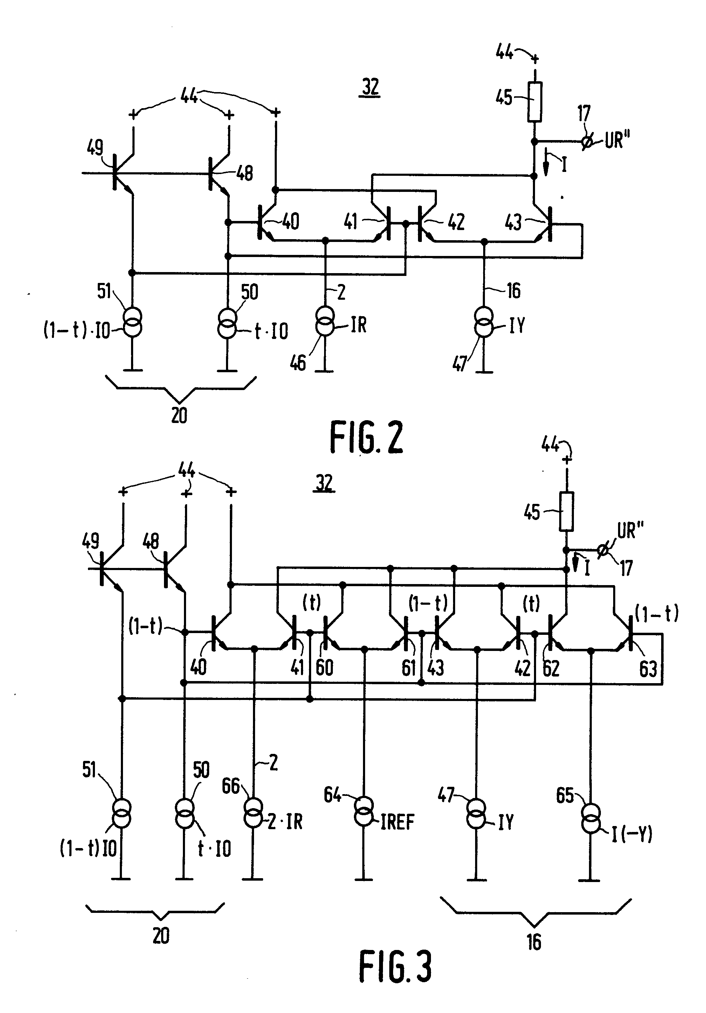

Fig. 2 zeigt ein Ausführungsbeispiel für eine der Potentiometerstufen 32, 33 oder 34, dargestellt am Beispiel der Potentiometerstufe 32 für das rote Farbwertsignal R. Die Potentiometerstufe 32 umfaßt in an sich bekannter Weise ein Quartett aus vier Transistoren 40, 41, 42, 43, deren Emitter-, Basis- und Kollektoranschlüsse je zu Paaren miteinander verbunden sind, wobei jeder Transistor 40, 41, 42 bzw. 43 mit jedem seiner Anschlüsse mit einem anderen der Transistoren 40, 41, 42 bzw. 43 verbunden ist. Die miteinander verbundenen Kollektoranschlüsse der Transistoren 40, 42 sind unmittelbar, diejenigen der Transistoren 41, 43 über einen Arbeitswiderstand 45 an einen Versorgungsspannungsanschluß 44 geführt. Die Summe der Kollektorströme in den Transistoren 41, 43 - der Ausgangsstrom I - ruft am Arbeitswiderstand 45 eine Spannung hervor, die als Ausgangsspannung UR'' am Ausgang 17 der Potentiometerstufe 32 abgegeben wird. Diese Ausgangsspannung UR'' stellt das eingestellte und mit dem eingestellten Leuchtdichtesignal Y' verknüpfte rote Farbwertsignal R'' dar.

Den miteinander und mit dem Farbwertsignaleingang 2 für das rote Farbwertsignal R verbundenen Emitteranschlüssen der Transistoren 40, 41 wird von einer Stromquelle 46 ein Strom IR eingespeist, der das rote Farbwertsignal R darstellt. Entsprechend wird den miteinander und mit dem Eingang 16 der Potentiometerstufe 32 verbundenen Emitteranschlüssen der Transistoren 42, 43 von einer Stromquelle 47 ein Strom IY zugeführt, der das eingestellte Leuchtdichtesignal darstellt.

Den miteinander verbundenen Basisanschlüssen der Transistoren 40, 43 wird die Emitterspannung einer Emitterfolgerschaltung aus einem ersten Emitterfolgertransistor 48 und einer ersten Einstellstromquelle 50, den miteinander verbundenen Basisanschlüssen der Transistoren 41, 42 die Emitterspannung einer zweiten Emitterfolgerschaltung zugeführt, die aus einem zweiten Emitterfolgertransistor 49 und einer zweiten Einstellstromquelle 51 besteht. Die Kollektoranschlüsse der Emitterfolgertransistoren 48, 49 sind an den Versorgungsspannungsanschluß 44 geführt, ihren miteinander verbundenen Basisanschlüssen wird eine Referenzspannung zugeleitet. Die Ströme der Einstellstromquellen 50, 51 bilden eine konstante Stromsumme I0, die sich auf die erste und die zweite Einstellstromquelle 50 und 51 im Verhältnis zu (1 - t) aufteilt. Dabei ist t ein zwischen 0 und 1 wählbarer Einstellfaktor für die Farbwertsignale, der im Spezialfall mit dem Einstellfaktor s der Farbsättigung übereinstimmt. Im allgemeinen ergibt sich jedoch der Einstellfaktor s aus dem Produkt des Einstellfaktors t mit einer Konstanten.

Die Verbindungen der Einstellstromquellen 50, 51 zu den Emitterfolgertransistoren 48, 49 bilden zusammen den Einstellanschluß 20 der Farbeinstellstufe 1.

Durch Wahl des Einstellfaktors t zwischen den Werten 0 und 1 ist es möglich, die Farbsättigung zwischen 0 für ein reines Schwarzweißbild und 1 für nominelle Farbsättigung einzustellen.

Fig. 3 zeigt eine Abwandlung der Potentiometerstufe 32, bei der gegenüber der Ausführung gemäß Fig. 2 zwei weitere, emittergekoppelte Transistorenpaare 60, 61 und 62, 63 dem Transistorquartett 40 bis 43 hinzugefügt sind. Dabei ist das erste Transistorenpaar 60, 61 mit seinen Basisanschlüssen zwischen die Basisanschlüsse der Transistoren 41 und 43 und das zweite Transistorenpaar mit dem Basisanschluß seines Transistors 62 an den Basisanschluß des Transistors 42 geschaltet. Während die Kollektoranschlüsse der Transistoren 40, 42, 60, 63 unmittelbar an den Versorgungsspannungsanschluß 44 geführt sind, sind die Kollektoranschlüsse der Transistoren 41, 43, 61, 62 mit dem Ausgang 17 der Potentiometerstufe 32 verbunden. Elemente, die mit Fig. 2 übereinstimmen, sind im übrigen wieder mit denselben Bezugszeichen versehen.

Die miteinander verbundenen Emitteranschlüsse des dritten Transistorenpaares 60, 61 werden mit einem Referenzstrom IREF aus einer Referenzstromquelle 64 gespeist, während den gemeinsamen Emitteranschlüssen des vierten Transistorenpaares 62, 63 aus einer Stromquelle 65 ein Strom I(- Y) zugeleitet wird, der dem negativen eingestellten Leuchtdichtesignal Y' entspricht. Die Emitteranschlüsse des zweiten und vierten Transistorenpaares 42, 43 und 62, 63 bilden den Eingang 16 der Potentiometerstufe 32 für das eingestellte Leuchtdichtesignal Y'.

Dem Farbwertsignaleingang 2 für das rote Farbwertsignal R wird bei der Anordnung nach Fig. 3 aus einer Stromquelle 66 ein Strom zugeführt, der dem doppelten des Stromes IR entspricht, der in Fig. 2 das rote Farbwertsignal R darstellt. Demgegenüber bleibt der Wert des Stromes IY von Fig. 2 auch in der Schaltung nach Fig. 3 erhalten. Mit der aus Fig. 2 identisch übernommenen Einstellung der Potentiometerstufe mit dem Einstellfaktor t im Wertebereich zwischen 0 und 1 ergibt sich für die Schaltung nach Fig. 3 ein Wertebereich des Einstellfaktors s der Farbsättigung von 0 bis 2, d.h. von einem reinen Schwarzweißbild über nominelle Farbsättigung bis zu einer Übersättigung von 6 dB.

Der Übersichtlichkeit halber sind an den Verbindungspunkten der Basisanschlüsse der Transistorenpaare 40 bis 43 und 60 bis 63 (die Einstellfaktoren t bzw. (1 - t) aufgetragen, wie sie an den entsprechenden Stellen auf die Stromverteilung in den Transistorenpaaren wirken.

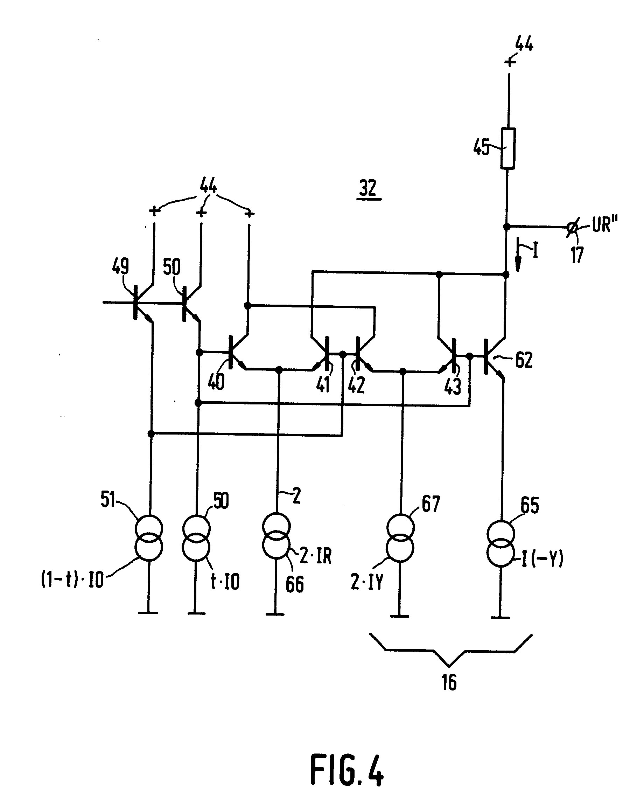

Fig. 4 zeigt eine weitere Abwandlung der Potentiometerstufe 32, die - wie Fig. 3 - eine Einstellung der Farbsättigung in einem Wertebereich des Einstellfaktors s von 0 bis 2, d.h. vom Schwarzweißbild bis zur Übersättigung von 6 dB ermöglicht. Dabei sind mit den voraufgehenden Figuren übereinstimmende Teile wieder mit denselben Bezugszeichen versehen. Die Schaltung nach Fig. 4 kommt gegenüber der Schaltung nach Fig. 2 mit einem zusätzlichen Transistor 62 aus, der wie der Transistor 62 des vierten Transistorpaares in Fig. 3 angeschlossen ist und im wesentlichen zur Herstellung gleicher Potentialverhältnisse an den Stromquellen 65 für den Strom I(- Y) sowie 66 für den Strom 2x IR dient. Für die prinzipielle Funktion der Schaltungsanordnung ist der Transistor 62 nicht von Bedeutung; er kann daher auch weggelassen und die Stromquelle 65 unmittelbar mit dem Ausgang 17 der Potentiometerstufe 32 verbunden werden. Das zweite Transistorenpaar 42, 43 wird im vorliegenden Beispiel mit einem Strom IY gespeist, der dem doppelten des Stromes IY der Stromquelle 47 aus den Fig. 2 und 3 entspricht. Dieser Strom wird von einer Stromquelle 67 erzeugt. Die Anschlüsse der Stromquellen 65 und 67 zum Transistor 62 bzw. zum Ausgang 17 und zu den verbundenen Emitteranschlüssen des zweiten Transistorenpaares 42, 43 bilden den Eingang 16 der Potentiometerstufe 32 für das eingestellte Leuchtdichtesignal Y'. Der Einstellfaktor t variiert für eine Einstellung der Farbsättigung vom schwarzweiß Bild bis zur Übersättigung von 6 dB im Wertebereich zwischen 0 und 1.

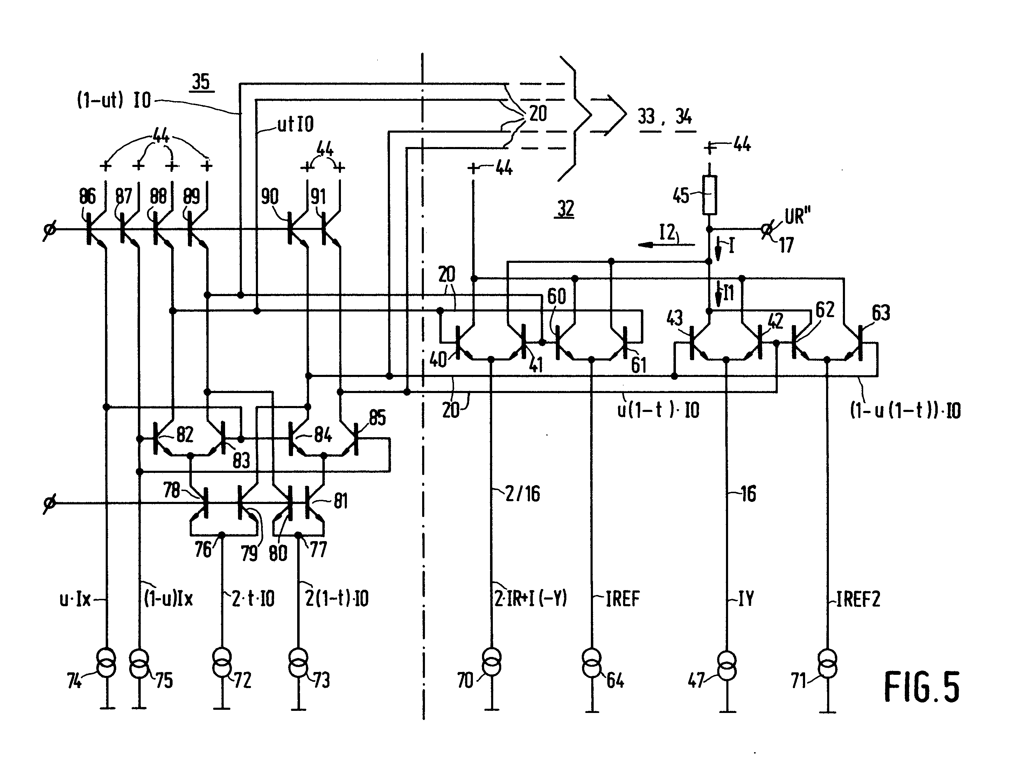

Fig. 5 zeigt ein weiteres Außführungsbeispiel für die Potentiometerstufe 32 und die Einstellsignal-Kombinationsschaltung 35. Mit den vorherigen Figuren übereinstimmende Teile sind wieder mit identischen Bezugszeichen versehen. In der Potentiometerstufe 32 sind nun das erste und das dritte Transistorenpaar 40, 41 und 60, 61 bzw. 42, 43 und 62, 63 zu je einem über die Basisanschlüsse getrennt angesteuerten Transistorquartett verbunden, wobei die Kollektoranschlüsse der Transistoren wieder in der beschriebenen Weise mit dem Versorgungsspannungsanschluß 44 bzw. dem Ausgang 17 der Potentiometerstufe 32 verbunden sind. Die Ströme, die den verbundenen Emitteranschlüssen der einzelnen Transistorenpaare zugeführt werden, entsprechen - in den Werten aus den Fig. 2 bis 4 ausgedrückt - für das erste Transistorenpaar 40, 41 der Summe aus dem zweifachen Strom IR und dem Strom I(- Y), für das zweite Transistorenpaar 42, 43 dem Strom IY, für das dritte Transistorenpaar 60, 61 dem Referenzstrom IREF und für das vierte Transistorenpaar 62, 63 einem zweiten Referenzstrom IREF2. Dementsprechend werden das erste Transistorenpaar 40, 41 aus einer Stromquelle 70, das zweite Transistorenpaar 42, 43 aus der Stromquelle 47, das dritte Transistorenpaar 60, 61 aus der Referenzstromquelle 64 und das vierte Transistorenpaar 62, 63 aus einer zweiten Referenzstromquelle 71 gespeist. Die Verbindung von der Stromquelle 70 zum ersten Transistorenpaar 40, 41 bildet den Farbwertsignaleingang 2 und gleichzeitig eine Leitung des Eingangs 16 für das eingestellte Leuchtdichtesignal Y′, und zwar dessen negativen Wert, während die Verbindung zwischen der Stromquelle 47 und dem zweiten Transistorenpaar 42, 43 die zweite Leitung des Eingangs 16 - und zwar für das positive, eingestellte Leuchtdichtesignal Y′ - darstellt.

Die erste Einstellsignal-Kombinationsschaltung 35, die über den Einstellanschluß 20 - hier gebildet durch zwei Leitungspaare - außer der gezeichneten Potentiometerstufe 32 auch die Potentiometerstufen 33 und 34 steuert, umfaßt zwei Paare gegenläufig gesteuerter Stromquellen 72, 73 für die Einstellung der Farbsättigung und 74, 75 zur zusätzlichen Kontrasteinstellung. Die Stromquellen 72, 73 liefern in ihrer Summe einen konstanten Gleichstrom der Größe 2xI0, der zwischen ihnen im Verhältnis t zu (1 - t) aufgeteilt ist. Entsprechend teilen sich die Stromquellen 74, 75 einen weiteren, konstanten Gleichstrom Ix im Verhältnis u zu (1 - u) auf. Der Einstellparameter t dient dabei zum Einstellen der Farbsättigung, der Einstellparameter u zum Einstellen des Kontrastes. Beide lassen sich im Wertebereich von 0 bis 1 variieren.

Der Strom von der Stromquelle 72 wird über einen ersten Stromaufteiler 76, bestehend aus zwei an den Basis- und den Emitteranschlüssen verbundenen Transistoren 78, 79, in zwei gleiche Stromanteile der Größe t x I0 aufgeteilt, die in den Kollektoranschlüssen der Transistoren 78 und 79 fließen. Entsprechend teilt ein zweiter Stromaufteiler 77 den Strom der Stromquelle 73 in zwei gleiche Anteile (1 - t) I0 an den Kollektoranschlüssen seiner Transistoren 80, 81 auf.

Die erste Einstellsignal-Kombinationsschaltung 35 enthält weiterhin ein Transistorquartett aus einem fünften Transistorenpaar 82, 83 und einem sechsten Transistorenpaar 84, 85, die in einer den bereits beschriebenen Transistorenquartetten entsprechenden Weise zusammengeschaltet sind. Die miteinander verbundenen Basisanschlüsse der Transistoren 82 und 85 sind mit einem Anschluß der Stromquelle 75 verbunden, der weiterhin an einen Emitterfolgertransistor 87 angeschlossen ist. In gleicher Weise sind die miteinander verbundenen Basisanschlüsse der Transistoren 83, 84 mit der Stromquelle 74 und einem Emitterfolgertransistor 86 verbunden.

Über das Transistorquartett 82 bis 85 werden die Stromanteile aus den Stromquellen 72 und 73, die einen Einstellwert für die Farbsättigung darstellen, zusätzlich gemäß dem Stromverhältnis aus den Stromquellen 74, 75 und damit entsprechend der zusätzlichen Kontrasteinstellung auf die Kollektoranschlüsse des fünften und des sechsten Transistorenpaares 82, 83 bzw. 84, 85 aufgeteilt. Den Kollektorströmen der Transistoren 83 und 84 wird außerdem von dem jeweils nicht zugehörigen Stromaufteiler 76 bzw. 77 der durch die Kontrasteinstellung nicht beeinflußte Stromanteil der Einstellströme für die Farbsättigung überlagert. Die so gewonnenen, kombinierten Einstellströme werden vom fünften und vom sechsten Transistorenpaar 82, 83 bzw. 84, 85 über getrennte Leitungen der Potentiometerstufe 32 und entsprechend den Potentiometerstufen 33 und 34 und darin getrennt dem Transistorquartett 40, 41, 60, 61 bzw. 42, 43, 62, 63 zugeleitet und steuern diese über die miteinander verbundenen Basisanschlüsse. An den Leitungen des Einstellanschlußes 20 sind der Übersicht halber die resultierenden Einstellströme angegeben. Bei einer Variation der Einstellparameter u, t zwischen 0 und 1 ergibt sich eine Kontrastregelung von 0 bis zur vollen Leuchtdichtesignalamplitude und eine Einstellung der Farbsättigung von 0 (Schwarzweißbild) bis zur Übersättigung von 6 dB.

In der Schaltungsanordnung nach Fig. 5 sind in der ersten Einstellsignal-Kombinationsschaltung 35 die Emitterfolgertransistoren 86 bis 91 mit ihren Kollektoranschlüssen gemeinsam an dem Versorgungsspannungsanschluß 44 und mit ihren Basisanschlüssen gemeinsam an eine Referenzspannung gelegt; entsprechend wird auch den Transistoren 78 bis 81 an ihren miteinander verbundenen Basisanschlüssen eine gemeinsame Referenzspan-

nung zugeleitet.

## Ansprüche

1. Schaltungsanordnung zum Einstellen der Farbsättigung eines Farbfernsehsignals, gekennzeichnet durch eine Farbeinstellstufe (1), der im Farbfernsehsignal enthaltene Farbinformation in Form von Farbwertsignalen (R, G, B) zuführbar ist und von der in ihrer Amplitude eingestellte Farbwertsignale ($R'$, $G'$, $B'$) abgebbar sind, eine Matrixschaltung (8) zum Kombinieren der Farbwertsignale (R, G, B) zu einem Leuchtdichtesignal (Y), eine Leuchtdichte-Einstellstufe (10) zum Einstellen der Amplitude des Leuchtdichtesignals (Y) gegenläufig zur Amplitude der Farbwertsignale (R, G, B) und eine Verknüpfungsanordnung (15) zum additiven Verknüpfen des eingestellten Leuchtdichtesignals ($Y'$) mit jedem der eingestellten Farbwertsignale ($R'$, $G'$, $B'$).

2. Schaltungsanordnung nach Anspruch 1, dadurch gekennzeichnet, daß die Farbwertsignale (R, G, B) in der Farbeinstellstufe (1) mit dem Einstellfaktor (s) der Farbsättigung und das Leuchtdichtesignal (Y) in der Leuchtdichte-Einstellstufe (10) mit einem der Differenz aus dem Nominalwert (snom) und dem aktuellen Wert (s) des Einstellfaktors der Farbsättigung entsprechenden Einstellfaktor (snom - s) der Leuchtdichte (Y) multiplizierbar sind.

3. Schaltungsanordnung nach Anspruch 1 oder 2, dadurch gekennzeichnet, daß sich der Wertebereich des Einstellfaktors (s) der Farbsättigung von 0 bis 2 erstreckt.

4. Schaltungsanordnung nach Anspruch 1, 2 oder 3, dadurch gekennzeichnet, daß statt des eingestellten Leuchtdichtesignals ($Y'$) ein Referenzwert (YREF) mit den eingestellten Farbwertsignalen ($R'$, $G'$, $B'$) verknüpfbar ist.

5. Schaltungsanordnung nach Anspruch 1, 2, 3 oder 4, dadurch gekennzeichnet, daß zur zusätzlichen Kontrasteinstellung der Farbwertsignale ($R'$, $G'$, $B'$) die Einstellung in der Farbeinstellstufe (1) und der Leuchtdichte-Einstellstufe (10) durch einen Kontrast-Einstellfaktor (k) beeinflußbar ist.

6. Schaltungsanordnung nach Anspruch 5, dadurch gekennzeichnet, daß die Einstellfaktoren (s) der Farbsättigung und der Leuchtdichte (snom - s) mit dem Kontrast-Einstellfaktor (k) multiplizierbar und die Produkte der Farb- (1) bzw. der Leuchtdichte-Einstellstufe (10) zuleitbar sind.

7. Schaltungsanordnung nach einem der vorhergehenden Ansprüche, dadurch gekennzeichnet, daß das Leuchtdichtesignal (Y) in der Leuchtdichte-Einstellstufe (10) im Sinne einer Helligkeitseinstellung beeinflußbar ist (mit h).

8. Schaltungsanordnung nach einem der vorhergehenden Ansprüche, dadurch gekennzeichnet, daß die Farbeinstellstufe (1) und die Verknüpfungsanordnung (15) in einer Potentiometerschaltung (32, 33, 34) zusammengefaßt sind.

FIG.1

FIG.2

FIG.3

FIG.4

FIG.5

EP 0 381 276 A2